(19) Europäisches Patentamt
European Patent Office
Office européen des brevets

(11) **EP 3 591 207 A1**

(12) **EUROPEAN PATENT APPLICATION**

(43) Date of publication:
**08.01.2020 Bulletin 2020/02**

(51) Int Cl.:
***F02K 3/06*** (2006.01)

(21) Application number: **19182542.1**

(22) Date of filing: **26.06.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.07.2018 GB 201810887**

(71) Applicant: **Rolls-Royce plc**
**London SW1E 6AT (GB)**

(72) Inventors:
• **Baralon, Stephane**
  **Derby, Derbyshire DE24 8BJ (GB)**
• **Wilson, Mark**
  **Derby, Derbyshire DE24 8BJ (GB)**
• **Phelps, Benedict**
  **Derby, Derbyshire DE24 8BJ (GB)**

(74) Representative: **Rolls-Royce plc**
**Intellectual Property Dept SinA-48**
**PO Box 31**
**Derby DE24 8BJ (GB)**

(54) **GAS TURBINE ENGINE OPERATING POINT**

(57) A gas turbine engine is provided with an engine core and a bypass duct. A fan drives the flow through the bypass duct. A bypass efficiency is defined as the efficiency of the fan compression of the bypass flow. The bypass efficiency is a function of the bypass flow rate at a given set of conditions. The bypass flow rate at the optimum bypass efficiency is appreciably lower than the maximum bypass flow rate at the given conditions. This results in increased design flexibility and improved overall engine performance.

Fig. 1

## Description

The present disclosure relates to a gas turbine engine. Aspects of the present disclosure relate to a gas turbine engine having a fan system that allows improved efficiency and/or operability.

Gas turbine engines typically operate over a wide range of conditions. For example, gas turbine engines that are used to power aircraft are required to operate over a wide envelope of conditions experienced during a flight cycle.

Turbofan gas turbine engines comprise a fan that sends a first portion of flow through a bypass duct (so-called "bypass flow") and a second portion of the flow through an engine core (so-called "core flow"). The bypass flow typically provides the majority of the thrust for the gas turbine engine during most flight conditions. The bypass exit flow is significantly slower than the core exit flow, and provides thrust at greater efficiency than the thrust provided by the core flow. Accordingly, the performance of the fan is an important factor in determining the overall performance of a gas turbine engine.

Conventionally, gas turbine engines have been developed so as to provide a fan that operates a maximum efficiency when the gas turbine engine is operating at cruise conditions, because this is the condition at which the engine operates for the longest period during a flight cycle. As such, conventional engines have been designed so as to optimize the peak efficiency of the fan at cruise conditions, with little or no motivation to consider the performance of the fan at cruise away from the peak efficiency operating point.

According to a first aspect there is provided a gas turbine engine for an aircraft comprising:

an engine core comprising a turbine, a compressor, a combustor, and a core shaft connecting the turbine to the compressor;

a fan located upstream of the engine core, the fan comprising a plurality of fan blades;

a bypass duct defined radially outside the engine core and radially inside a nacelle, such that a proportion of the fan flow flows through the bypass duct as bypass flow, and a further proportion of the fan flow flows through the engine core as core flow; and

a gearbox that receives an input from the core shaft and outputs drive to the fan so as to drive the fan at a lower rotational speed than the core shaft.

The gas turbine engine is operable at a reference operating point at cruise conditions for the engine, the reference operating point defining a fan reference rotational speed. A bypass efficiency is defined as the efficiency of the fan compression of the bypass flow, the bypass efficiency being a function of the fan bypass inlet mass flow rate. At the fan reference rotational speed and cruise conditions, the ratio of the fan bypass inlet mass flow rate that would give the peak bypass efficiency to the maximum possible fan bypass inlet mass flow rate is no greater than 0.96.

According to an aspect, there is provided a gas turbine engine comprising:

an engine core comprising a turbine, a compressor, and a core shaft connecting the turbine to the compressor;

a fan located upstream of the engine core, the fan comprising a plurality of fan blades;

a bypass duct; and

a gearbox that receives an input from the core shaft and outputs drive to the fan so as to drive the fan at a lower rotational speed than the core shaft, wherein:

the gas turbine engine is operable in a reference operating point that defines a thrust level and fan reference rotational speed at cruise conditions;

at the fan reference rotational speed and cruise conditions, the ratio of the fan bypass inlet mass flow rate that would give the peak efficiency of the fan compression of the bypass flow to the maximum possible fan bypass inlet mass flow rate is no greater than 0.96.

The cruise conditions may correspond to:

a forward Mach number of 0.8;
a pressure of 23000 Pa; and
a temperature of -55 deg C.

The inventors of the present disclosure have recognized for the first time the advantages of providing a gas turbine engine in which, at the fan reference rotational speed and at cruise conditions, the ratio of the fan bypass inlet mass flow rate that would give the peak bypass efficiency to the maximum possible fan bypass inlet mass flow rate is lower than that of conventional gas turbine engines. In practical terms, this may mean that the gas turbine engine can tolerate a greater range of fan bypass inlet mass flow rates around a reference operating point (which may be referred to as a cruise operating point) for a given level of bypass efficiency. Additionally or alternatively, it may mean that the gas turbine engine can tolerate a greater range of fan bypass inlet mass flow rates around an optimum cruise bypass efficiency point for a given level of bypass efficiency.

In turn, the present inventors have realized that this may result in greater design flexibility and/or greater flexibility in engine operation. For example, it may be possible for the reference operating point to be selected to be at a point that has greater stall margin and/or flutter margin. Such improved margins may thus be beneficial in themselves. Additionally or alternatively, they may be used to facilitate different fan blade designs - for example designs which may be more aerodynamically efficient and/or mechanically advantageous (for example lower weight and/or higher stiffness), but which are inherently more susceptible to stall and/or flutter and so could not be used but for the increased flexibility provided by the gas turbine engine of the present disclosure.

By way of further example, the greater flexibility offered by the gas turbine engine of the present disclosure may allow the reference operating point to be chosen to be at a point that allows greater bypass mass flow - and thus greater efficiency (and/or lower specific thrust, as defined elsewhere herein) - than if the selection of the reference operating point were constrained to be exactly at the position of optimum bypass efficiency, as with conventional engines.

The term "fan bypass inlet mass flow rate" as used herein may mean the mass flow rate of the flow at the fan inlet that subsequently flows down the bypass duct (i.e. not including the flow that subsequently flows through the engine core), and may be quasi non-dimensionalised. Thus, references herein to fan bypass inlet mass flow rate may mean quasi non-dimensional mass flow rate given by:

$$\dot{m}\frac{\sqrt{T0in}}{P0in}$$

Where:

$\dot{m}$ is absolute mass flow rate $\left(\frac{Kg}{s}\right)$ of the flow through the bypass duct

T0in is the stagnation temperature at the inlet to the fan

P0in is the stagnation pressure at the inlet to the fan

The reference operating point may be the operating point of the engine when it is operating at cruise, for example when an aircraft to which it is attached is operating at cruise. This may be the operating point at which the designers of the gas turbine engine use when designing the fan. The reference operating point may be determined by the cruise conditions (for example the forward speed and atmospheric conditions at cruise) and the throttle position. This combination of cruise conditions and throttle position may provide a desired thrust level that is required from the gas turbine engine at the reference operating point. The desired level of thrust may be that required to maintain the cruise Mach Number of an aircraft to which the gas turbine engine is attached divided by the number of engines attached to the aircraft, i.e. to maintain steady state operation, without accelerating or decelerating. The reference operating point may be the point at which the gas turbine engine is designed to operate in order to give a desired thrust level at cruise conditions, which may be referred to as the aerodynamic design point. The reference operating point defines the fan reference rotational speed.

The total pressure of the flow is increased by the fan, with a fan tip pressure ratio being defined as the ratio of the total pressure of the flow downstream of the fan that subsequently flows through the bypass duct to the total pressure of the flow at the inlet to the fan. The bypass efficiency may be defined as the ratio of the energy used by the fan to generate the fan tip pressure ratio to that which would be used during isentropic compression.

As noted elsewhere herein, the bypass efficiency is a function of the fan bypass inlet mass flow rate at cruise conditions and the fan reference rotational speed. The bypass duct may comprise a throat that defines a throat area. The fan bypass inlet mass flow rate at the reference operating point (which may be referred to as a reference operating mass flow rate) may be determined by the throat area. Accordingly, because the bypass efficiency is a function of the fan bypass inlet mass flow rate, the throat area may determine the bypass efficiency at the reference operating point. The throat may be defined as the position in the bypass duct that has the minimum flow area. The throat may be choked (i.e. the Mach Number at the throat may be 1) at the reference operating point. The throat may be anywhere along the bypass duct, for example at the exit of the bypass duct or upstream of the exit of the bypass duct.

The throat area may be chosen to be different to the throat area that would be required to give peak bypass efficiency at the fan reference rotational speed and cruise conditions. The throat area may be chosen to be greater than the throat area that would be required to give peak bypass efficiency at the fan reference rotational speed and cruise conditions.

The reference operating mass flow rate may not be the same as the fan bypass inlet mass flow rate that would give peak bypass efficiency at the fan reference rotational speed and cruise conditions. The reference operating mass flow rate may be greater than the fan bypass inlet mass flow rate that would give the peak bypass efficiency at the fan reference rotational speed and cruise conditions. The throat of such a bypass duct (that would give peak bypass efficiency at the fan reference rotational speed and cruise conditions) would be different (for example smaller) to that of the gas turbine engine defined and/or claimed herein with reference to the present disclosure. The reference operating mass flow rate may be between the fan bypass inlet mass flow rate that would give the peak bypass efficiency and the maximum possible fan bypass inlet mass flow rate at the fan reference rotational speed and cruise conditions. The throat of a bypass duct that would give the maximum possible fan bypass inlet mass flow rate would be different (for example larger) to that of the gas turbine engine defined and/or claimed herein with reference to the present disclosure.

It will be appreciated that for a gas turbine engine described and/or claimed herein, it may not be possible to change the fan bypass inlet mass flow rate without changing the fan reference rotational speed at cruise conditions. Indeed, at cruise conditions and at the fan reference rotational speed, the fan bypass inlet mass flow rate (and thus the fan bypass efficiency) may be fixed by the bypass duct geometry (for example the area of the throat of the bypass duct). However, if the gas turbine engine were to comprise a variable area nozzle, it may be possible to change the fan bypass inlet mass flow rate without changing the fan reference rotational speed at cruise conditions. Typically, gas turbine engines as described and/or claimed herein would not have a variable area nozzle i.e. they would typically have a fixed-area nozzle. The geometry of such a fixed-area nozzle may be not be changed, for example during use of the engine.

For gas turbine engines described and/or claimed herein, at the fan reference rotational speed and cruise conditions, the fan bypass inlet mass flow rate that would give the peak bypass efficiency may mean the theoretical fan bypass inlet mass flow rate for the gas turbine engine having a particular fan that may be achieved through selecting a bypass duct having a different throat area (whilst retaining the same fan). For gas turbine engines described and/or claimed herein, at the fan reference rotational speed and cruise conditions, the maximum possible fan bypass inlet mass flow rate may mean the theoretical maximum fan bypass inlet mass flow rate for the gas turbine engine having a particular fan that may be achieved through selecting a bypass duct having a different throat area (whilst retaining the same fan).

The fan bypass inlet mass flow rate that would give the peak bypass efficiency and the maximum possible fan bypass inlet mass flow rate may be considered to be properties of the fan. The actual fan bypass inlet mass flow rate at the fan reference rotational speed and cruise conditions is determined at least in part by the throat area of the bypass duct.

The fan bypass inlet mass flow rate at the reference operating point may be at least 0.5%, for example at least 1%, for example at least 1.5%, for example at least 2%, for example at least 2.5%, for example at least 3% higher than the fan bypass inlet mass flow rate that would give the peak bypass efficiency at the fan reference rotational speed and cruise conditions.

The bypass efficiency at the reference operating point may be within 0.5%, for example within 0.4%, within 0.3%, within 0.2% or within 0.1% of the peak bypass efficiency possible at the fan reference rotational speed and cruise conditions.

At the fan reference rotational speed and cruise conditions, the ratio of the fan bypass inlet mass flow rate that would give the peak bypass efficiency to the maximum possible fan bypass inlet mass flow rate may be no greater than 0.95, for example no greater than 0.94, for example no greater than 0.93, for example no greater than 0.92, for example no greater than 0.91, for example no greater than 0.9.

A quasi-non-dimensional mass flow rate Q for the gas turbine engine is defined as:

$$Q = W \frac{\sqrt{T0}}{P0.A_{fan}}.$$

where:

W is mass flow rate through the fan in Kg/s;
T0 is average stagnation temperature of the air at the fan face in Kelvin;
P0 is average stagnation pressure of the air at the fan face in Pa;
$A_{fan}$ is the area of the fan face in m$^2$.

At engine cruise conditions the quasi-non-dimensional mass flow rate Q may be in the range of from 0.029 Kgs$^{-1}$N$^{-1}$K$^{1/2}$ to 0.036 Kgs$^{-1}$N$^{-1}$K$^{1/2}$.

As referred to herein, the area of the fan face ($A_{fan}$) is defined as:

$$A_{fan} = \frac{\pi D^2}{4}\left(1 - \left(\frac{h}{t}\right)^2\right)$$

Where:

D is the diameter (in metres) of the fan at the leading edge (i.e. at the tips of the leading edge of the fan blades);
h is the distance (in metres) between the centreline of the engine and the radially inner point on the leading edge of the gas-washed part of the fan blade; and t is the distance (in metres) between the centreline of the engine and the radially outer point on the leading edge of the fan blade (i.e. t = D/2).

At cruise conditions, the value of Q may be in the range of from: 0.0295 to 0.0335; 0.03 to 0.033; 0.0305 to 0.0325; 0.031 to 0.032 or on the order of 0.031 or 0.032. Thus, it will be appreciated that the value of Q may be in a range having a lower bound of 0.029, 0.0295, 0.03, 0.0305, 0.031, 0.0315 or 0.032 and/or an upper bound of 0.031, 0.0315, 0.032, 0.0325, 0.033, 0.0335, 0.034, 0.0345, 0.035, 0.0355 or 0.036 (all values in this paragraph being in SI units, i.e. Kgs$^{-1}$N$^{-1}$K$^{1/2}$).

In use of the gas turbine engine, the fan (with associated fan blades) rotates about a rotational axis. This rotation results in the tip of the fan blade moving

with a velocity $U_{tip}$. The work done by the fan blades on the flow results in an enthalpy rise dH of the flow. A fan tip loading may be defined as $dH/U_{tip}^2$, where dH is the enthalpy rise (for example the 1-D average enthalpy rise) across the fan and $U_{tip}$ is the (translational) velocity of the fan tip, for example at the leading edge of the tip (which may be defined as fan tip radius at leading edge multiplied by angular speed). The fan tip loading at the reference operating point may be greater than (or on the order of) any of: 0.28, 0.29, 0.3, 0.31, 0.32, 0.33, 0.34, 0.35, 0.36, 0.37, 0.38, 0.39 or 0.4 (all units in this paragraph being $Jkg^{-1}K^{-1}/(ms^{-1})^2$). The fan tip loading may be in an inclusive range bounded by any two of the values in the previous sentence (i.e. the values may form upper or lower bounds). Purely by way of example, the fan tip loading may be in the range of from 0.3 to 0.35.

Specific thrust of an engine may be defined as the net thrust of the engine divided by the total mass flow through the engine. At the reference operating point, the specific thrust of an engine described and/or claimed herein may be less than (or on the order of) any of the following: 110 $Nkg^{-1}s$, 105 $Nkg^{-1}s$, 100 $Nkg^{-1}s$, 95 $Nkg^{-1}s$, 90 $Nkg^{-1}s$, 85 $Nkg^{-1}s$, 80 $Nkg^{-1}s$, 75 $Nkg^{-1}s$ or 70 $Nkg^{-1}s$. The specific thrust may be in an inclusive range bounded by any two of the values in the previous sentence (i.e. the values may form upper or lower bounds). Such engines may be particularly efficient in comparison with conventional gas turbine engines. Purely by way of example, at the reference operating point, the specific thrust may be in the range of from 70 $Nkg^{-1}s$ to 110 $Nkg^{-1}s$.

A fan pressure ratio may be defined as the ratio of the mean total pressure of the flow at the fan exit to the mean total pressure of the flow at the fan inlet. At the reference operating point, the fan pressure ratio may be no greater than 1.5, for example no greater than 1.45, for example no greater than 1.4, for example no greater than 1.35.

The gas turbine engine may comprise an annular splitter at which the flow is divided between the core flow that flows through the engine core, and the bypass flow that flows along a bypass duct.

A fan root pressure ratio, defined as the ratio of the mean total pressure of the flow at the fan exit that subsequently flows through the engine core (i.e. becomes core flow) to the mean total pressure of the flow at the fan inlet, may be no greater than 1.25, for example no greater than 1.24, 1.23, 1.22, 1.21, 1.2, 1.19, 1.18, 1.17, 1.16 or 1.15 at the reference operating point.

A fan tip pressure ratio may be defined as the ratio of the mean total pressure of the flow at the fan exit that subsequently flows through the bypass duct to the mean total pressure of the flow at the fan inlet. The ratio between the fan root pressure ratio to the fan tip pressure ratio at the reference operating point may be less than 0.95, for example less than 0.94, 0.93, 0.92, 0.91 or 0.9.

The gas turbine engine may comprise an intake that extends axially forwards of the fan. The intake may be part of the nacelle. An intake length L may be defined as the axial distance between the leading edge of the intake and the leading edge of the tip of the fan blades. A ratio of the intake length to the diameter D of the fan at its leading edge may be less than or equal to 0.4. Where the intake length varies around the circumference, the intake length L used to determine the ratio of the intake length to the diameter D of the fan may be measured at the $\pi/2$ or $3\pi/2$ positions from top dead centre of the engine (i.e. at the 3 o' clock or 9 o' clock positions), or the average of the intake length at these two positions where they are different.

Arrangements of the present disclosure may be particularly beneficial for fans that are driven via a gearbox. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

The gearbox is a reduction gearbox (in that the output to the fan is a lower rotational rate than the input from the core shaft). Any type of gearbox may be used. For example, the gearbox may be a "planetary" or "star" gearbox, as described in more detail elsewhere herein. The gearbox may have any desired reduction ratio (defined as the rotational speed of the input shaft divided by the rotational speed of the output shaft), for example greater than 2.5, for example in the range of from 3 to 4, for example on the order of or at least 3, 3.1, 3.2, 3.3, 3.4, 3.5, 3.6, 3.7, 3.8, 3.9, 4.0, 4.1 or 4.2. The gear ratio may be, for example, between any two of the values in the previous sentence. Purely by way of example, the gearbox may be a "star" gearbox having a ratio in the range of from 3.1 or 3.2 to 3.8. In some arrangements, the gear ratio may be outside these ranges.

In any gas turbine engine as described and/or claimed herein, the combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at the reference operating point may be less than 2500 rpm, for example less than 2300 rpm. Purely by way of further non-limitative example, the rotational speed of the fan at the reference operating point for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at the reference operating point for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case. The bypass ratio may be defined at the reference operating point.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at the reference operating point may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of the fan blade may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area (and/or throat area) of the bypass duct to be varied in use. The general principles of the present disclosure may apply to engines with or without a VAN.

The fan of a gas turbine as described and/or claimed herein may have any desired number of fan blades, for example 14, 16, 18, 20, 22, 24 or 26 fan blades.

As used herein, cruise conditions have the conventional meaning and would be readily understood by the skilled person. Thus, for a given gas turbine engine for an aircraft, the skilled person would immediately recognise cruise conditions to mean the operating point of the engine at mid-cruise of a given mission (which may be referred to in the industry as the "economic mission") of an aircraft to which the gas turbine engine is designed to be attached. In this regard, mid-cruise is the point in an aircraft flight cycle at which 50% of the total fuel that is burned between top of climb and start of descent has been burned (which may be approximated by the midpoint - in terms of time and/or distance- between top of climb and start of descent). Cruise conditions thus define an operating point of the gas turbine engine that provides a thrust that would ensure steady state operation (i.e. maintaining a constant altitude and constant Mach Number) at mid-cruise of an aircraft to which it is designed to be attached, taking into account the number of engines provided to that aircraft. For example where an engine is designed to be attached to an aircraft that has two engines of the same type, at cruise conditions the engine provides half of the total thrust that would be required for steady state operation of that aircraft at mid-cruise.

In other words, for a given gas turbine engine for an aircraft, cruise conditions are defined as the operating point of the engine that provides a specified thrust (required to provide - in combination with any other engines on the aircraft - steady state operation of the aircraft to which it is designed to be attached at a given mid-cruise Mach Number) at the mid-cruise atmospheric conditions (defined by the International Standard Atmosphere according to ISO 2533 at the mid-cruise altitude). For any given gas turbine engine for an aircraft, the mid-cruise thrust, atmospheric conditions and Mach Number are known, and thus the operating point of the engine at cruise conditions is clearly defined.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be part of the cruise conditions. For some aircraft, the cruise conditions may be outside these ranges, for example below Mach 0.7 or above Mach 0.9.

Purely by way of example, the cruise conditions may correspond to standard atmospheric conditions (according to the International Standard Atmosphere, ISA) at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m

(around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to an operating point of the engine that provides a known required thrust level (for example a value in the range of from 30kN to 35kN) at a forward Mach number of 0.8 and standard atmospheric conditions (according to the International Standard Atmosphere) at an altitude of 38000ft (11582m). Purely by way of further example, the cruise conditions may correspond to an operating point of the engine that provides a known required thrust level (for example a value in the range of from 50kN to 65kN) at a forward Mach number of 0.85 and standard atmospheric conditions (according to the International Standard Atmosphere) at an altitude of 35000ft (10668m).

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

According to an aspect, there is provided an aircraft comprising a gas turbine engine as described and/or claimed herein. The aircraft according to this aspect is the aircraft for which the gas turbine engine has been designed to be attached. Accordingly, the cruise conditions according to this aspect correspond to the mid-cruise of the aircraft, as defined elsewhere herein.

According to an aspect, there is provided a method of operating a gas turbine engine as described and/or claimed herein. The operation may be at the cruise conditions as defined elsewhere herein (for example in terms of the thrust, atmospheric conditions and Mach Number).

According to an aspect, there is provided a method of operating an aircraft comprising a gas turbine engine as described and/or claimed herein. The operation according to this aspect may include (or may be) operation at the mid-cruise of the aircraft, as defined elsewhere herein.

According to an aspect, there is provided a fan for a gas turbine engine as described and /or claimed herein.

According to an aspect, there is provided a fan for a gas turbine engine having an engine core and a bypass duct, the fan being designed to operate at a reference operating point at cruise conditions for the engine, the reference operating point defining a fan reference rotational speed, wherein:

a bypass efficiency is defined as the efficiency of the fan compression of the flow that would subsequently flow through the bypass duct, the bypass efficiency being a function of the mass flow through the bypass duct; and

at the fan reference rotational speed and cruise conditions, the ratio of the mass flow rate through a bypass duct that would give the peak bypass efficiency to the maximum possible mass flow rate through a bypass duct that could be supported by the fan is no greater than 0.96.

There is also provided a gas turbine engine comprising a fan according to the above aspect, wherein the bypass duct has a throat having a throat area that defines the minimum flow area through the bypass duct. At the fan reference rotational speed and cruise conditions, the mass flow rate through the bypass duct is dependent on the throat area. The throat area may be fixed. The throat area may be between the area of a throat that would result in the peak bypass efficiency and the throat area that would result in the maximum possible bypass mass flow rate at the fan reference rotational speed and cruise conditions. The throat area may result in a mass flow rate through the bypass duct at the reference operating point that is at least 2% higher than the mass flow rate through the bypass duct that would give the peak bypass efficiency at the fan reference rotational speed and cruise conditions. The throat area may give a bypass efficiency at the reference operating point that is no more than 0.5% lower than the maximum possible bypass efficiency at the cruise conditions and fan reference rotational speed.

According to an aspect, there is provided a method of operating a gas turbine engine. The method comprises:

using the engine to propel an aircraft in a climb phase, a cruise phase, and a descent phase, the cruise phase being directly after the climb phase and directly before the descent phase, and covering all operation between the end of the climb phase and the start of the descent phase; and

for at least 80% of the time that the gas turbine engine is operating in the cruise phase, the ratio of the fan bypass inlet mass flow rate that would give the peak bypass efficiency to the maximum possible fan bypass inlet mass flow rate is no greater than 0.96, wherein:

the bypass efficiency is defined as the efficiency of the fan compression of the bypass flow, the bypass efficiency being a function of the fan bypass inlet mass flow rate.

The gas turbine engine may be as described and/or claimed herein, for example comprising:

an engine core comprising a turbine, a compressor, a combustor, and a core shaft connecting the turbine to the compressor;

a fan located upstream of the engine core, the fan comprising a plurality of fan blades;

a bypass duct defined radially outside the engine core and radially inside a nacelle, such that a proportion of the fan flow flows through the bypass duct as bypass flow, and a further proportion of the fan flow flows through the engine core as core flow; and

a gearbox that receives an input from the core shaft and outputs drive to the fan so as to drive the fan at a lower rotational speed than the core shaft.

According to an aspect, there is provided an aircraft comprising at least two gas turbine engines, at least one of which is as described and/or claimed herein, wherein at the cruise conditions, the gas turbine engines provide sufficient thrust to maintain the cruise Mach Number of the aircraft.

According to an aspect, there is provided an aircraft comprising at least two gas turbine engines, each gas turbine engine being as described and/or claimed herein, wherein at the cruise conditions, each gas turbine engine provides thrust equal to the thrust required to maintain the cruise Mach Number divided by the number of gas turbine engines attached to the aircraft.

Any other compatible feature described and/or claimed herein may be combined with the above aspect.

According to an aspect, there is provided a gas turbine engine comprising any one or more of the features described and/or claimed herein. For example, where compatible, such a gas turbine engine may have any one or more of the features or values described herein of: quasi-non-dimensional mass flow rate Q; specific thrust; maximum thrust, turbine entry temperature; overall pressure ratio; bypass ratio; fan diameter; fan rotational speed; fan hub to tip ratio; fan pressure ratio; fan root pressure ratio; ratio between the fan root pressure ratio to the fan tip pressure ratio; fan tip loading; number of fan blades; construction of fan blades; and/or gear ratio. Such a gas turbine engine may comprise a gearbox that receives an input from a core shaft and outputs drive to a fan so as to drive the fan at a lower rotational speed than the core shaft.

In general, the skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:

Figure 1 is a sectional side view of a gas turbine engine;

Figure 2 is a close up sectional side view of an upstream portion of a gas turbine engine;

Figure 3 is a partially cut-away view of a gearbox for a gas turbine engine;

Figure 4 is a graph showing bypass flow against bypass efficiency for a gas turbine engine in accordance with an example of the present disclosure;

Figure 5 is a graph showing bypass flow against bypass efficiency for a gas turbine engine in accordance with an example of the present disclosure; and

Figure 6 is a graph showing bypass flow against bypass efficiency for a gas turbine engine in accordance with an example of the present disclosure.

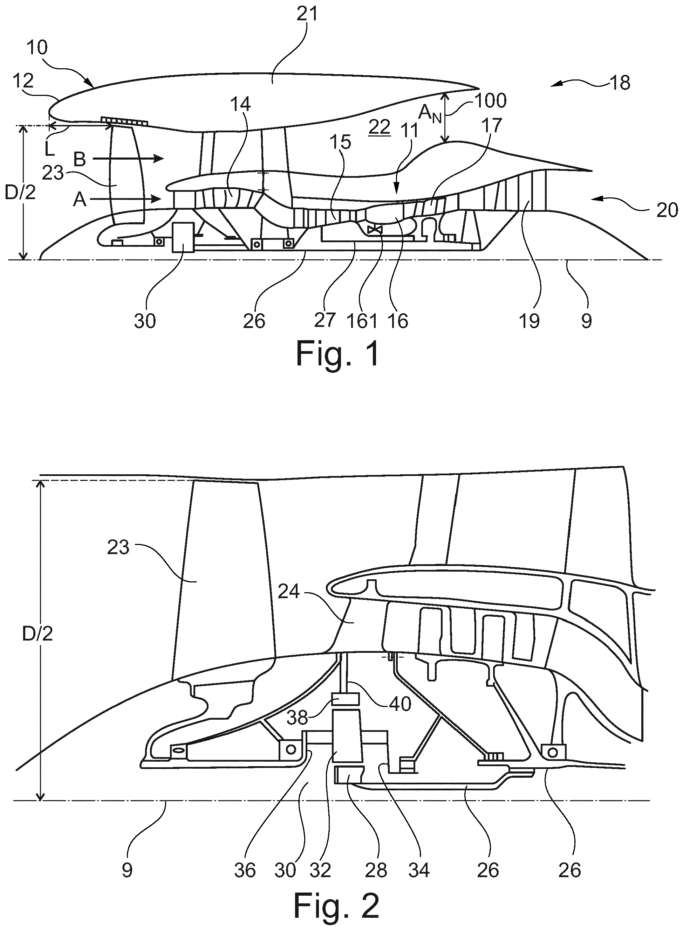

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and a gearbox 30.

The bypass duct 22 has a throat 100 which is defined by the minimum flow area $A_N$ through the bypass duct 22. In use, for example at certain operating conditions such as cruise conditions, the flow through the bypass duct 22 may be choked at the throat 100. For a given set of conditions (for example cruise conditions and a fixed fan rotational speed) the mass flow rate through the bypass duct 22 and/or over the fan 23 may be determined at least in part (for example solely or substantially solely determined by) the area $A_N$ of the throat 100.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. A throttle 161 is provided to control the fuel supply to the combustor. The amount of fuel supplied is dependent on the throttle position. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The gearbox 30 is a reduction gearbox, and may be an epicyclic gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

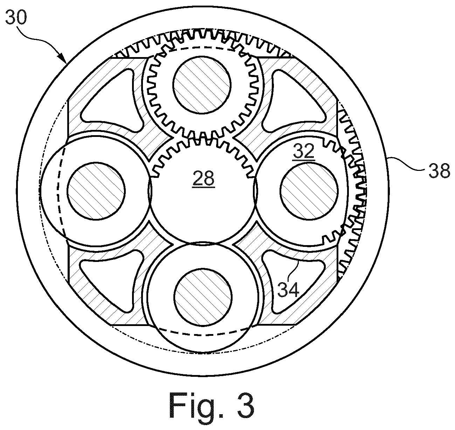

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow exhaust nozzle 20, 18 meaning that the flow through the bypass duct 22 has its own exhaust that is separate to and radially outside the core engine exhaust 20. However, this is not limiting, and any aspect of the present disclosure may also apply to engines in which the flow through the bypass duct 22 and the flow through the core 11 are mixed, or combined, before (or upstream of) a single exhaust nozzle, which may be referred to as a mixed flow exhaust nozzle. One or both nozzles (whether mixed or split flow) may have a fixed or variable area. Whilst the described example relates to a turbofan engine comprising a gearbox, the disclosure may apply, for example, to any type of gas turbine engine. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

The gas turbine engine 10 is required to operate in a range of different conditions, or states. Such conditions may be dependent upon the point in a flight cycle of an aircraft to which the gas turbine engine 10 may be attached. For example, the atmospheric conditions may vary significantly between take off and cruise. By way of further example, the forward speed and/or thrust requirement to accelerate up to or maintain a given forward speed may vary during the flight cycle.

Typically, gas turbine engine operation may be described at various points in the flight cycle, such as:

- maximum take-off - which describes the performance of the engine at runway conditions (which may be taken as 101.3kPa and 30 deg C), for example at maximum throttle;
- Top of climb - which describes the performance of the engine at the transition between the climb phase of the aircraft cycle and the start of the cruise phase; and
- Cruise - which describes the performance of the engine during the cruise phase. By way of example, the cruise conditions may be as described/defined elsewhere herein.

Typically, a gas turbine engine will be designed for optimum efficiency at cruise, because this is the condition at which the engine operates for the longest period of time, and thus the condition at which most fuel is burned. Furthermore, because the engine operating point can be known and controlled accurately at cruise (for example through an understanding of the environmental cruise conditions, fan rotational speed at cruise and/or control of the throttle position 161), conventional engines are simply designed such that the fan operates at peak efficiency at cruise, with little consideration given to the characteristics of the fan performance away from the cruise operating point. For example, gas turbine engine fans may typically be designed to provide peak efficiency at cruise by selecting a given bypass mass flow rate at cruise, which may be determined by selection of an appropriate bypass geometry - for example having an appropriate throat 100 and associated throat area $A_N$ - with little consideration given to the fan efficiency away from that cruise point (for example, away from the selected cruise mass flow rate).

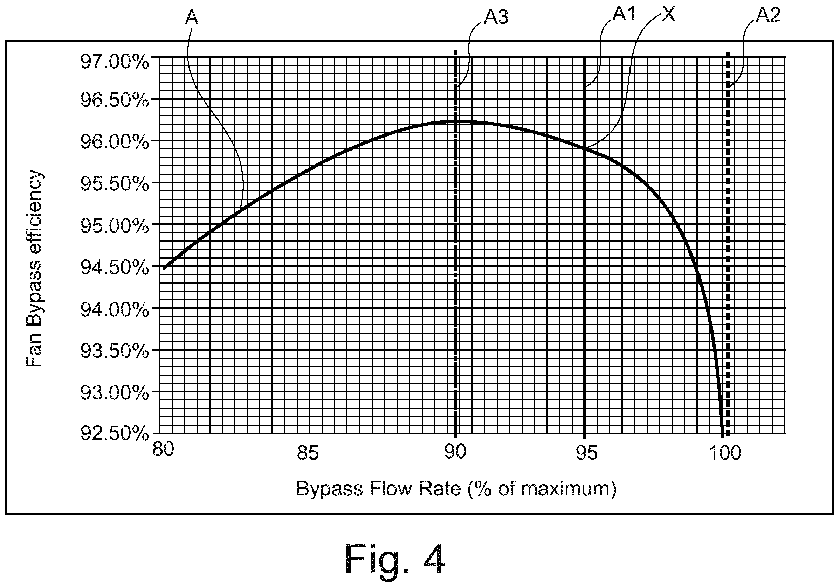

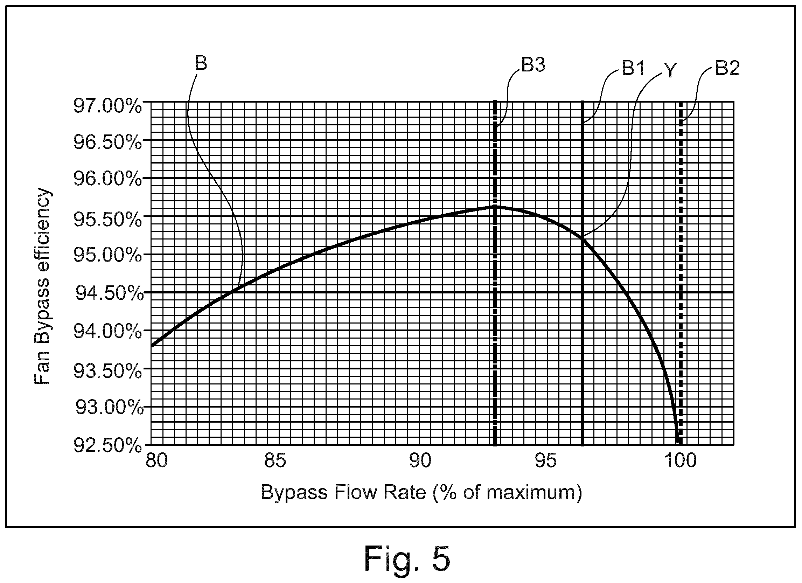

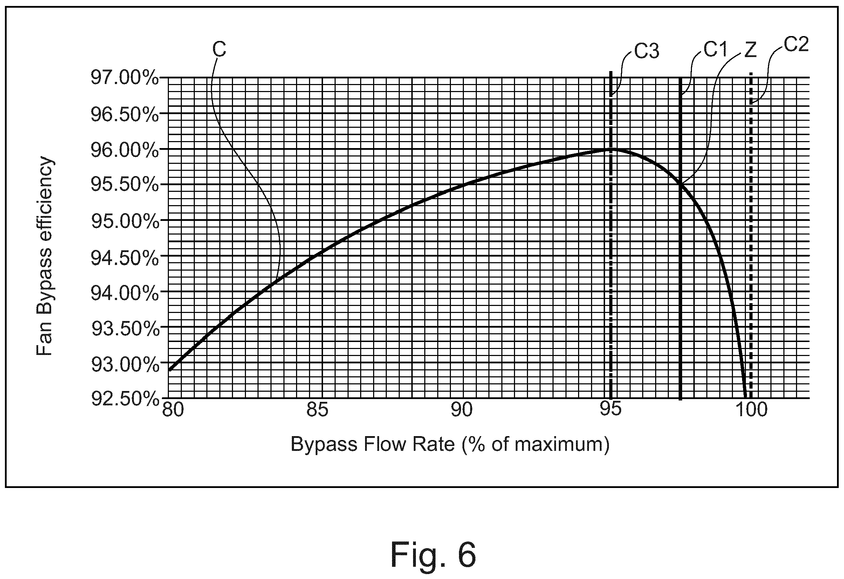

However, the gas turbine 10 according to the present disclosure has been developed using a novel approach that considers a wider range of engine and fan characteristics. The resulting gas turbine engine 10 has a fan 23 that exhibits different characteristics to those of conventional engines. In this regard, Figures 4 to 6 are graphs showing fan bypass inlet mass flow rate (i.e. mass flow that subsequently flows down the bypass duct 22) as a percentage of the maximum possible fan bypass inlet mass flow rate at cruise conditions for a given fan reference rotational speed (x-axis) vs fan bypass efficiency (y-axis, which may be referred to herein simply as bypass efficiency, as defined elsewhere herein). The three graphs (Figure 4 to 6) represent three different examples of gas turbine engines 10 in accordance with the present disclosure. In each case, the curves A, B, C show the relationship between the fan bypass inlet mass flow rate and the bypass efficiency when the respective engine is operating at cruise conditions and fan reference rotational speed (as defined elsewhere herein). References herein to fan bypass inlet mass flow rate may mean quasi non-dimensional mass flow rate given by:

$$\dot{m}\frac{\sqrt{T0in}}{P0in}$$

Where:

$\dot{m}$ is absolute mass flow rate $\left(\dfrac{Kg}{s}\right)$

*T0in is the stagnation temperature at the inlet to the fan*

*P0in is the stagnation pressure at the inlet to the fan*

At the cruise conditions and fan reference rotational speed, the fan bypass inlet mass flow rate may be changed by changing the area $A_N$ of the throat 100. Accordingly, for gas turbine engines 10 that have fixed geometry nozzles (i.e. fixed bypass duct 22 shapes) and thus a fixed area $A_N$ of the throat 100, the operating point of the fan 23 on the curves A, B, C at the cruise conditions is fixed by the selected bypass duct geometry, for example by the selected throat area $A_N$

In this regard, the solid vertical lines A1, B1, C1 represent the chosen fan bypass inlet mass flow rate of the respective gas turbine engine 10 at the chosen operating point of the fan 23 (and thus the gas turbine engine 10) at cruise. Thus, the point (X, Y, Z respectively) at which the vertical line A1, B1, C1 crosses the respective curve A, B, C indicates the operating point of the fan 23 (and thus the gas turbine engine 10) at the cruise conditions, which may be referred to herein as the reference operating point X, Y, Z. The reference operating point X, Y, Z may be determined by the throttle position 161 required at cruise conditions to generate the fan reference rotational speed and give a desired level of thrust.

The dashed vertical lines A2, B2, C2 indicate the maximum possible fan bypass inlet mass flow rate of a respective engine 10 at the cruise conditions and fan reference rotational speed using the fan 23. In other words, for a given fan 23, it is not possible for the fan bypass inlet mass flow rate to increase beyond the dashed vertical lines A2, B2, C2 at the cruise conditions and fan reference rotational speed regardless of the geometry of the bypass duct 22, for example regardless of the area $A_N$ of the throat 100.

The dot-chain vertical lines A3, B3, C3 indicate the fan bypass inlet mass flow rate of the respective engine 10 required to give the maximum bypass efficiency at the cruise conditions and fan reference rotational speed using the fan 23. In other words, for a given fan 23, it is not possible to improve the bypass efficiency above that corresponding to the mass flow rate at the dot-chain vertical lines A3, B3, C3 at the cruise conditions and fan reference rotational speed regardless of the geometry of the bypass duct 22, for example regardless of the area $A_N$ of the throat 100.

For conventional engines, the position of the dot chain lines A3, B3, C3 would be very close to the position of dashed lines A2, B2, C2. However, for fans 23 and gas turbine engines 10 comprising fans 23 in accordance with the present disclosure (such as the three corresponding to the graphs shown by way of example in Figures 4 to 6), at the fan reference rotational speed and cruise conditions, the ratio of the fan bypass inlet mass flow rate that would give the peak bypass efficiency (dot-chain lines A3, B3, C3) to the maximum possible fan bypass inlet mass flow rate (dashed vertical lines A2, B2, C2) is no greater than 0.96. The fan bypass inlet mass flow rate that would give the peak bypass efficiency may be said to be 96% or less of the maximum possible fan bypass inlet mass flow rate at the fan reference rotational speed and cruise conditions.

In other words, the dot chain lines A3, B3, C3 and the dashed lines A2, B2, C2 are further apart for fans 23 and gas turbine engines 10 according to the present disclosure than they are for conventional fans and gas turbine engines.

This increased separation of the mass flow rate at cruise conditions and fan reference rotational speed between the maximum possible and that required to give the maximum bypass efficiency opens up greater design freedom. Purely by way of example, it may allow considerable separation between the mass flow rate at the reference operating point (i.e. the point at which the engine 10 is designed to operate at cruise conditions, solid vertical lines A1, B1, C1) and the mass flow rate at the peak bypass efficiency (dot-chain lines A3, B3, C3). As noted elsewhere herein, in turn this may result in greater stall and/or flutter margin, which may allow wider design freedom in other areas, such as fan blade geometry and/or construction and/or mass. In a conventional engine, such separation would result in unacceptably low efficiency at the reference operating point (i.e. for the point at which the engine is operating at cruise).

In conventional engines, the solid vertical lines A1, B1, C1, the dashed vertical lines A2, B2, C2 and the dot-chain vertical lines A3, B3, C3 would typically all be much closer together, because the focus would conventionally be on maximizing the peak efficiency value, and then setting the reference operating point to coincide as closely as possible with that peak efficiency. Thus, in a conventional engine, the solid vertical lines A1, B1, C1 (reference operating mass flow rate) and the dot-chain vertical lines A3, B3, C3 (peak bypass efficiency) would be necessarily much closer together, and typically substantially overlapping.

The greater design freedom offered by the fans 23 and gas turbine engines 10 according to the present disclosure may allow throat areas $A_N$ of the bypass duct 22 to be selected that are different (for example larger or smaller) to the throat area that would be selected purely in order to maximize the bypass efficiency at the cruise conditions and fan reference rotational speed. For example, a given difference (for example given percentage increase) between the bypass mass flow rate resulting from a selected throat area $A_N$ of the bypass duct 22 and the bypass mass flow rate resulting from a throat area selected purely in order to maximize the bypass efficiency would result in a greater reduction in bypass efficiency for a conventional fan or engine than for fans 23 or engines 10 in accordance with the present disclosure.

The arrangements and advantages associated therewith (for example in terms of the increased separation between the maximum mass flow rate and the mass flow rate at the peak bypass efficiency) may be particularly effective for gas turbine engines 10 in which the fan 23 is linked to a turbine 19 via a gearbox 30. In such gas turbine engines 10, there may be greater opportunity to take advantage of the increased design freedom. Purely by way of example, the lower rotational speed and/or larger diameter of the fan for a given power of engine may result in different fan design challenges compared with engines that do not have a gearbox - such as, for example, different flutter and/or stall and/or surge characteristics - which may be addressed more effectively through the design freedom offered by gas turbine engines according the present disclosure.

A further example of a feature that may be better optimized for gas turbine engines 10 according to the present disclosure compared with conventional gas turbine engines is the intake region, for example the ratio between the intake length L and the fan diameter D. Referring to Figure 1, the intake length L is defined as the axial distance between the leading edge of the intake and the leading edge of the tip of the fan blades, and the diameter D of the fan 23 is defined at the leading edge of the fan 23. Gas turbine engines 10 according to the present disclosure, such as that shown by way of example in Figure 1, may have values of the ratio L/D as defined herein, for example less than or equal to 0.4. Without being bound by any particular theory, reducing the ratio of L/D may be more attractive for gas turbine engines 10 in accordance with the present disclosure because of extra operational stability afforded by the lower than conventional ratio of the mass flow rate through the bypass duct at the peak bypass efficiency to the maximum possible mass flow through the bypass duct. This may make the fan 23 more resilient to distortion in the inlet flow, thereby requiring a relatively shorter intake length L to cope with the range of flow distortions that may be experienced in use.

The gas turbine engine 10 shown in Figure 1 and described herein may comprise any one or more of the features described and/or claimed herein. For example, where compatible, such a gas turbine engine 10 may have any one or more of the features or values described herein of: quasi-non-dimensional mass flow rate Q; specific thrust; maximum thrust, turbine entry temperature; overall pressure ratio; bypass ratio; fan diameter; fan rotational speed; fan hub to tip ratio; fan pressure ratio; fan root pressure ratio; ratio between the fan root pressure ratio to the fan tip pressure ratio; fan tip loading; number of fan blades; construction of fan blades; and/or gear ratio.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

**Claims**

1. A gas turbine engine (10) for an aircraft comprising:

   an engine core (11) comprising a turbine (19), a compressor (14), a combustor (16), and a core shaft (26) connecting the turbine to the compressor;
   a fan (23) located upstream of the engine core, the fan comprising a plurality of fan blades;
   a bypass duct (22) defined radially outside the engine core and radially inside a nacelle (21), such that a proportion of the fan flow flows through the bypass duct as bypass flow, and a further proportion of the fan flow flows through the engine core as core flow; and

   a gearbox (30) that receives an input from the core shaft (26) and outputs drive to the fan so as to drive the fan at a lower rotational speed than the core shaft, wherein:

   the gas turbine engine is operable at a reference operating point at cruise conditions for the engine, the reference operating point defining a fan reference rotational speed;
   a bypass efficiency is defined as the efficiency of the fan compression of the bypass flow, the bypass efficiency being a function of the fan bypass inlet mass flow rate; and
   at the fan reference rotational speed and cruise conditions, the ratio of the fan bypass inlet mass flow rate that would give the peak bypass efficiency to the maximum possible fan bypass inlet mass flow rate is no greater than 0.96.

2. A gas turbine engine according to claim 1, wherein at the reference operating point, the gas turbine engine delivers the thrust required to maintain the cruise conditions.

3. A gas turbine engine according to claim 1 or claim 2, wherein a reference operating mass flow rate, defined as the fan bypass inlet mass flow rate at the reference operating point, is between the fan bypass inlet mass flow rate that would give the peak bypass efficiency and the maximum possible fan bypass inlet mass flow rate at the fan reference rotational speed and cruise conditions.

4. A gas turbine engine according to any one of the preceding claims, wherein the fan bypass inlet mass flow rate at the reference operating point is at least 2%, optionally 2.5%, higher than the fan bypass inlet mass flow rate that would give the peak bypass efficiency at the fan reference rotational speed and cruise conditions.

5. A gas turbine engine according to any one of the preceding claims, wherein:

   the bypass duct comprises a throat having a throat area that defines the minimum flow area through the bypass duct; and
   the fan bypass inlet mass flow rate at the reference operating point is determined by the throat area, and wherein, optionally:

   the throat area is greater than the throat area that would be required to give peak bypass efficiency at the fan reference rotational speed and cruise conditions; and/or further optionally
   the throat is a fixed-area.

**6.** A gas turbine engine according to any one of the preceding claims, wherein:

at the fan reference rotational speed and cruise conditions, the ratio of the fan bypass inlet mass flow rate that would give the peak bypass efficiency to the maximum possible fan bypass inlet mass flow rate is no greater than 0.94; and/or the bypass efficiency at the reference operating point is within 0.5% of the peak bypass efficiency at the fan reference rotational speed and cruise conditions; and/or a specific thrust is defined as net engine thrust divided by mass flow rate through the engine and, at cruise conditions, the specific thrust is in the range of from 70 Nkg$^{-1}$s to 110 Nkg$^{-1}$s, optionally 70 Nkg$^{-1}$s to 90 Nkg$^{-1}$s.

**7.** A gas turbine engine according to any one of the preceding claims, wherein a quasi-non-dimensional mass flow rate Q is defined as:

$$ Q = W \frac{\sqrt{T0}}{P0.A_{fan}}. $$

where:

W is mass flow rate through the fan in Kg/s; T0 is average stagnation temperature of the air at the fan face in Kelvin; P0 is average stagnation pressure of the air at the fan face in Pa; A$_{fan}$ is the area of the fan face in m$^2$, and

at engine cruise conditions: 0.029 Kgs$^{-1}$N$^{-1}$K$^{1/2}$ $\leq$Q $\leq$ 0.036 Kgs$^{-1}$N$^{-1}$K$^{1/2}$.

**8.** A gas turbine engine according to any one of the preceding claims, wherein:

a fan pressure ratio, defined as the ratio of the mean total pressure of the flow at the fan exit to the mean total pressure of the flow at the fan inlet, is no greater than 1.5, optionally in the range of from 1.35 to 1.45, at the reference operating point; and/or a fan root pressure ratio, defined as the ratio of the mean total pressure of the flow at the fan exit that subsequently flows through the engine core to the mean total pressure of the flow at the fan inlet, is no greater than 1.25 at the reference operating point, wherein, optionally, the ratio between the fan root pressure ratio to a fan tip pressure ratio at the reference operating point is no greater than 0.95, where the fan tip pressure ratio is defined as the ratio of the mean total pressure of the flow at the fan exit that subsequently flows through the bypass duct to the mean total pressure of the flow at the fan inlet.

**9.** A gas turbine engine according to any one of the preceding claims, wherein the forward speed of the gas turbine engine at the cruise conditions is in the range of from Mn 0.75 to Mn 0.85, and, optionally, the forward speed of the gas turbine engine at the cruise conditions is Mn 0.8.

**10.** A gas turbine engine according to any one of the preceding claims, wherein the cruise conditions correspond to:

atmospheric conditions defined by the International Standard Atmosphere at an altitude of 11582m and a forward Mach Number of 0.8; or atmospheric conditions defined by the International Standard Atmosphere at an altitude of 10668m and a forward Mach Number of 0.85.

**11.** A fan (23) for a gas turbine engine (10) having an engine core (11) and a bypass duct (22), the fan being designed to operate at a reference operating point at cruise conditions for the engine, the reference operating point defining a fan reference rotational speed, wherein:

a bypass efficiency is defined as the efficiency of the fan compression of the flow that would subsequently flow through the bypass duct, the bypass efficiency being a function of the mass flow through the bypass duct; and at the fan reference rotational speed and cruise conditions, the ratio of the fan bypass inlet mass flow rate that would give the peak bypass efficiency to the maximum possible fan bypass inlet mass flow rate that could be supported by the fan is no greater than 0.96.

**12.** A gas turbine engine comprising:

a fan according to claim 11 comprising the engine core (11) and bypass duct (22), wherein the bypass duct has a throat having a throat area that defines the minimum flow area through the bypass duct; and at the fan reference rotational speed and cruise conditions, the mass flow rate through the bypass duct is dependent on the throat area, wherein, optionally, the throat area is fixed.

**13.** A gas turbine engine according to claim 12, wherein:

the throat area is between the area of a throat that would result in the peak bypass efficiency and the throat area that would result in the maximum possible fan bypass inlet mass flow rate at the fan reference rotational speed and cruise conditions, and, optionally, the throat area results in a mass flow rate through the bypass duct at the reference operating point that is at least 2% higher than the mass flow rate through the bypass duct that would give the peak bypass efficiency at the fan reference rotational speed and cruise conditions; and/or

the throat area gives a bypass efficiency at the reference operating point that is within 0.5% of the maximum possible bypass efficiency at the cruise conditions and fan reference rotational speed.

14. A method of operating a gas turbine engine, the gas turbine engine comprising:

an engine core (11) comprising a turbine (19), a compressor (14), a combustor (16), and a core shaft (26) connecting the turbine to the compressor;
a fan (23) located upstream of the engine core, the fan comprising a plurality of fan blades;
a bypass duct (22) defined radially outside the engine core and radially inside a nacelle (21), such that a proportion of the fan flow flows through the bypass duct as bypass flow, and a further proportion of the fan flow flows through the engine core as core flow; and
a gearbox (30) that receives an input from the core shaft (26) and outputs drive to the fan so as to drive the fan at a lower rotational speed than the core shaft, wherein:
a bypass efficiency is defined as the efficiency of the fan compression of the bypass flow, the bypass efficiency being a function of the fan bypass inlet mass flow rate, the method comprising:

using the engine to propel an aircraft in a climb phase, a cruise phase, and a descent phase, the cruise phase being directly after the climb phase and directly before the descent phase, and covering all operation between the end of the climb phase and the start of the descent phase; and
for at least 80% of the time that the gas turbine engine is operating in the cruise phase, the ratio of the fan bypass inlet mass flow rate that would give the peak bypass efficiency to the maximum possible fan bypass inlet mass flow rate is no greater than 0.96.

15. An aircraft comprising at least two gas turbine engines, each gas turbine engine being in accordance with any one of claims 1 to 10, 12, or 13, wherein at the cruise conditions, each gas turbine engine provides thrust equal to the thrust required to maintain the cruise Mach Number divided by the number of gas turbine engines attached to the aircraft.

Fig. 1

Fig. 2

Fig. 3

Fig. 4

EP 3 591 207 A1

Fig. 5

EP 3 591 207 A1

Fig. 6

EP 3 591 207 A1

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/150489 A1 (UNITED TECHNOLOGIES CORP [US]) 25 September 2014 (2014-09-25)<br>* paragraphs [0032], [0033], [0042] *<br>* figure 4 * | 1-15 | INV.<br>F02K3/06 |
| A | CESARE A. HALL ET AL: "Engine Design Studies for a Silent Aircraft", JOURNAL OF TURBOMACHINERY, vol. 129, no. 3, 1 January 2007 (2007-01-01), page 479, XP055155366, ISSN: 0889-504X, DOI: 10.1115/1.2472398<br>* page 482 - page 483 *<br>* figures 7, 8 * | 1-15 | |
| A | ANDREAS PETERS ET AL: "Ultrashort Nacelles for Low Fan Pressure Ratio Propulsors", TRANSACTIONS OF THE ASME: JOURNAL OF TURBOMACHINERY., vol. 137, no. 2, 10 September 2014 (2014-09-10), page 021001, XP055346282, US ISSN: 0889-504X, DOI: 10.1115/1.4028235<br>* page 8 *<br>* figure 10 * | 1-15 | TECHNICAL FIELDS SEARCHED (IPC)<br><br>F02K<br>F02C |

The present search report has been drawn up for all claims

| Place of search | Date of completion of the search | Examiner |
|---|---|---|
| The Hague | 25 October 2019 | Kreissl, Franz |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 18 2542

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2019

| Patent document cited in search report | Publication date | Patent family member(s) | Publication date |
|---|---|---|---|
| WO 2014150489  A1 | 25-09-2014 | EP    2971534 A1<br>US  2015361824 A1<br>WO 2014143267 A1<br>WO 2014150489 A1 | 20-01-2016<br>17-12-2015<br>18-09-2014<br>25-09-2014 |

EPO FORM P0459

For more details about this annex : see Official Journal of the European Patent Office, No. 12/82